# EUROPEAN PATENT APPLICATION

(11) **EP 4 191 742 A1**
(43) Date of publication of application: **07.06.2023**
(21) Application number: 21849636.2
(22) Date of filing: 21.05.2021
(51) Int. Cl.: H01M 10/44, H01M 10/48, H02J 7/00, H02J 3/32, H02J 3/38

(54) **BATTERY UNIT**

(30) Priority: 30.07.2020 JP 2020128983
(71) Applicant: TESNOLOGY Inc., Minato-ku Tokyo 107-0052 (JP)
(72) Inventor: KONDO, Katsuhiko, Tokyo 107-0052 (JP); P. JOHNSON III, Raymond, Tokyo 107-0052 (JP)
(74) Representative: Schröer, Gernot H.
(86) International application number: PCT/JP2021/019318
(87) International publication number: WO 2022/024517

(57) **Abstract**

A battery unit includes a power storage unit for supplying power to an external device, a communication unit for performing communication with the external device, and a processor for performing a control process on the external device on the basis of a power storage status of the power storage unit or information obtained from the external device. For example, when the state of charge (SOC) of the power storage unit has lowered, the processor limits the operation of a household electric appliance with a low priority level in the control process.

## Description

### Field

The present invention relates to a battery unit including a storage battery.

### Background

There is a growing interest in a "sustainable society" against a backdrop of population growth accompanied by rapid increase in energy consumption. A sustainable society can be defined as a society capable of preserving the global environment, passing the preserved global environment to the next generation, and also satisfying the needs of the current generation.

In order to achieve a sustainable society, there have been needs for active use of natural energy such as photovoltaic power generation and wind power generation. Because the power generation capacities of photovoltaic power generation and wind power generation depend on the circumstances, electric systems to charge generated power in storage batteries such as lithium ion batteries and cover power supply by discharge of the storage batteries when sufficient power cannot be generated have started to be widely used.

### Related Art List

### Patent Literatures

Patent Literature 1: JP 2020-035225 A

### Summary

### Technical Problem

Because, however, the capacity of a storage battery is limited, the battery may run out of power if extremely adverse conditions are combined, for example. Unlike the case of power outage due to thunder, however, the power source is not suddenly lost. In other words, it is possible to avoid running out of power by recognizing signs of low battery beforehand and suppressing power use of household electric appliances.

The present invention has been achieved on the basis of recognition of the aforementioned problems, and a chief object thereof is to adjust power use in power equipment in which storage batteries are used.

### Solution to problem

A battery unit according to an aspect of the present invention includes: a power storage unit for supplying power to an external device; a communication unit for performing communication with the external device; and a processor for performing a control process on the external device on the basis of a power storage status of the power storage unit or information obtained from the external device.

### Advantageous Effects of Invention

The present invention enables adjustment of power use in power equipment in which storage batteries are used.

### Brief Description of Drawings

FIG. 1 is a configuration diagram of power equipment at a home.
FIG. 2 is a configuration diagram of a battery unit.
FIG. 3 is a configuration diagram of an outlet.
FIG. 4 is an outline diagram of communication in the power equipment.
FIG. 5 is an outline diagram of communication outside the power equipment.
FIG. 6 is a data structure diagram of an equipment component table.
FIG. 7 is a data structure diagram of an electric appliance table.
FIG. 8 is a screen diagram of an appliance setting screen.
FIG. 9 is a functional block diagram of the battery unit.
FIG. 10 is a sequence diagram of a preparation phase.
FIG. 11 is a flowchart illustrating processes of main processing in an embodiment.
FIG. 12 is a flowchart illustrating processes of limited mode processing.
FIG. 13 is a flowchart illustrating processes of normal mode processing.
FIG. 14 is a flowchart illustrating processes of encouraging processing.
FIG. 15 is a flowchart illustrating processes of main processing in a modification.
FIG. 16 is a flowchart illustrating processes of suppressing processing.
FIG. 17 is a configuration diagram of power equipment of a car.
FIG. 18 is a configuration diagram of power equipment of a ship.
FIG. 19 is a configuration diagram of power equipment of an aircraft.

### Description of Embodiments

### [Embodiment]

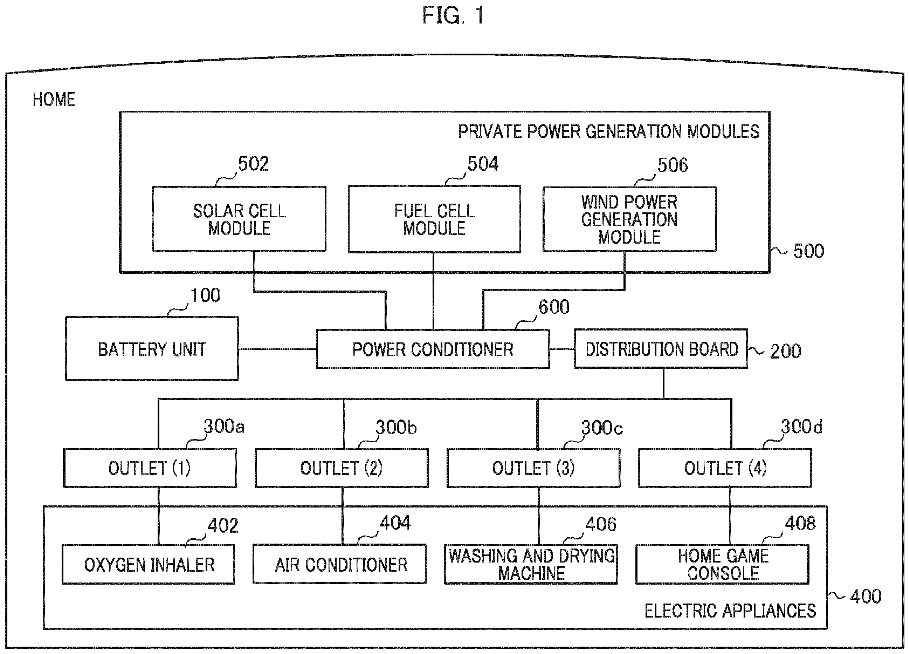

FIG. 1 is a configuration diagram of power equipment at a home.

In an embodiment, an off-grid home is assumed. An off-grid home uses power equipment that is not connected with a power grid (also referred to as a "transmission system") through which power is provided by an electric power company.

Off-grid power equipment includes private power generation modules 500 such as a solar cell module 502, a fuel cell module 504, and a wind power generation module 506 as power sources. All or only some of the solar cell module 502, the fuel cell module 504, and the wind power generation module 506 may be included. Direct current produced by the solar cell module 502, the fuel cell module 504, and the wind power generation module 506 is input to a power conditioner 600.

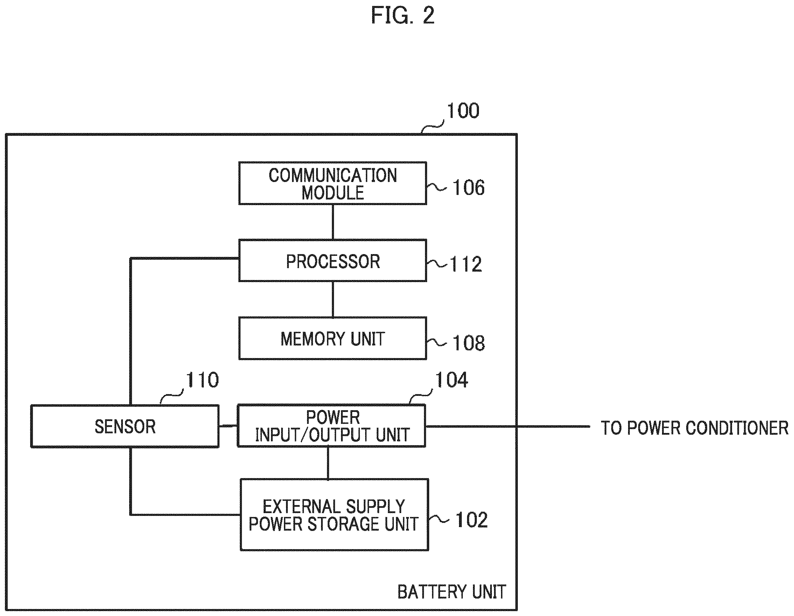

In the off-grid power equipment, a battery unit 100 for storing unused power is used. The battery unit 100 includes a storage battery (such as a lead storage battery, a lithium ion secondary battery, or a lithium ion polymer secondary battery) for storing power to be supplied to electric appliances 400 (such as an oxygen inhaler 402 and an air conditioner 404). The battery unit 100 in the present embodiment has communication and information processing functions. A configuration of the battery unit 100 will be described later with reference to FIG. 2.

The power conditioner 600 converts direct current from the solar cell module 502, the fuel cell module 504, and the wind power generation module 506 into alternating current, and transmits the alternating current to a distribution board (panel board) 200. When power from the solar cell module 502, the fuel cell module 504, and the wind power generation module 506 is not consumed, control is performed so that the power is transmitted to and stored in the battery unit 100 in direct current without being converted. In contrast, when power from the solar cell module 502, the fuel cell module 504, and the wind power generation module 506 is not sufficient to cover power to be consumed, control to discharge the battery unit 100 is also performed.

In a charging state, the battery unit 100 stores direct current input from the power conditioner 600. In a discharge state, the battery unit 100 outputs discharged direct current to the power conditioner 600. The power conditioner 600 converts the input direct current into alternating current, and transmits the alternating current to the distribution board 200.

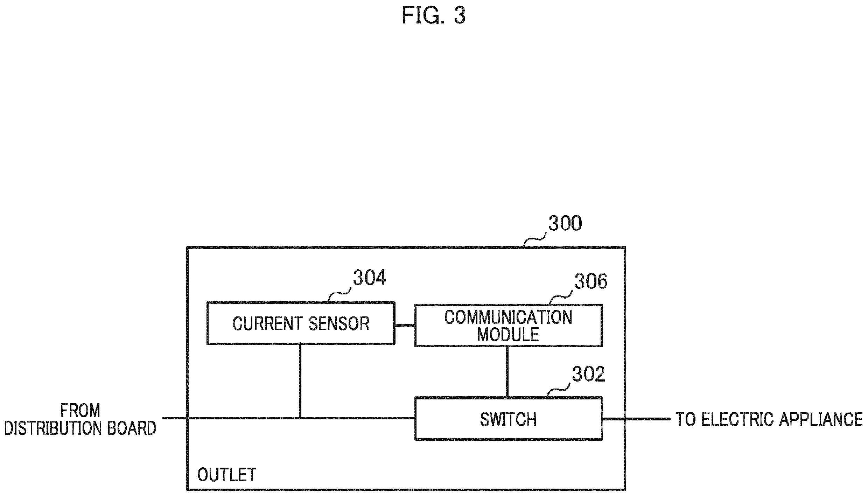

The distribution board 200 distributes the alternating current input from the power conditioner 600 to the four outlets 300a to 300d. The distribution board 200 includes a circuit breaker, and breakers for the individual outlets 300a to 300d. The outlets 300 each have a function of interrupting electricity upon receiving an instruction through communication. Note that the number in brackets at the end of each "outlet" in FIG. 1 is the number of the outlet 300. A configuration of the outlets 300 will be described later with reference to FIG. 3. In this example, the distribution board 200, the outlets 300, the private power generation modules 500, and the power conditioner 600 are examples of equipment components.

Widespread use of such off-grid electrical equipment has been desired in terms of the use of renewable energy. If off-grid equipment is used at homes in a depopulated area, for example, the need for capital investment to and maintenance of the transmission system is eliminated, and the costs for power supply in the society as a whole are reduced. There is, however, concern that a power shortage may rarely occur in such a case where the weather is extremely unusual. All necessary preparations are therefore needed to ensure sufficient power. Thus, the use of the electric appliances 400 may be partly limited depending on the circumstances at each home.

Typically, construction of the power equipment described above is completed when a house is built or through electric construction. Residents of the house use the power equipment to use any electric appliance. In this example, assume that the residents are a family of four consisting of a grandfather, parents, and a child, and use an oxygen inhaler 402, an air conditioner 404, a washing and drying machine 406, and a home game console 408. The grandfather has a disorder of the respiratory system, and uses the oxygen inhaler 402 when he does not feel well. The mother washes the clothes in the washing and drying machine 406. The father and the child may enjoy playing games on the home game console 408.

As illustrated, assume that the plug of the oxygen inhaler 402 is inserted in the outlet 300a, the plug of the air conditioner 404 is inserted in the outlet 300b, the plug of washing and drying machine 406 is inserted in the outlet 300c, and the plug of the home game console 408 is inserted in the outlet 300d. The oxygen inhaler 402, the air conditioner 404, the washing and drying machine 406, and the home game console 408 are powered by alternating current provided through the individual outlets.

While the electric appliances 400 each use alternating current as described above, the current supplied by the private power generation modules 500 or the battery unit 100 is direct current. The power conditioner 600 therefore serves as an inverter that converts direct current into alternating current.

The battery unit 100 of the present embodiment reduces power consumption of the electric appliances 400 depending on circumstances to achieve stable power supply. Thus, the battery unit 100 controls equipment components (such as the outlets 300) and the electric appliances 400 through communication. Hereinafter, details of control on the electric appliances 400 will be explained.

For example, when the state of charge (SOC) of the battery unit 100 has become low, the operation of an electric appliance 400 with a lowest priority level (the home game console 408, for example) is paused and cannot be restarted. When the SOC is still lower, the operation of an electric appliance 400 with a second lowest priority level (the washing and drying machine 406, for example) is paused and cannot be restarted. The home game console 408 and the washing and drying machine 406 each have a pause function. The home game console 408 saves game data. When the operation is resumed, the home game console 408 reloads the game data and resumes the game play from the pause point. The washing and drying machine 406 pauses washing or rinsing, but does not pause spin-drying or drying. When the operation is resumed, the operation is continued from washing or rinsing.

For the grandfather being not well, the oxygen inhaler 402 is indispensable. The oxygen inhaler 402 is therefore capable of operating even when the battery is likely to run out of power. Conversely, there is no problem if the home game console 408 does not operate as the father and the child can do something else such as helping with household tasks, doing exercises, having a chat, working or studying even if they cannot play games. As for washing, it is better not to have too many clothes to wash if possible, but washing need not necessarily be done right away. In this manner, the degree to which an electric appliance 400 needs to be always operable depends on the use and the purpose of the electric appliance 400. In view of such circumstances, the electric appliances 400 are selectively controlled.

Conversely, when the SOC of the battery unit 100 has become high, the operation of an electric appliance 400 in a standby state (the washing and drying machine 406 on which reservation is set, for example) is started. For example, in a case where the mother has set reservation to start washing at 11 a.m., washing is started even before 11 a.m. when the SOC becomes high. This prevents wasting of power generated by the private power generation modules 500 when the battery unit 100 is fully charged.

The battery unit 100 also performs control depending on the total amount of power generation of the private power generation modules 500. The amount of the power generation of the solar cell module 502 is large during clear weather, but is small during cloudy or rainy weather. The wind power generation module 506 generates power in a strong wind, but does not generate power in a light wind or during windless weather. Thus, the total amount of power generation of the private power generation modules 500 depends on circumstances. If the total amount of power generation of the private power generation modules 500 does not cover the total amount of power consumption of the electric appliances 400, the rest of power is supplied by the battery unit 100. In this case, however, it is preferable to suppress use of the battery unit 100 to some extent to save stored power.

For this reason, when the total amount of power generation of the private power generation modules 500 has become small, the operation of the electric appliance 400 with the lowest priority level (the home game console 408, for example) is paused and cannot be restarted. When the total amount of power generation is still smaller, the operation of the electric appliance 400 with the second lowest priority level (the washing and drying machine 406, for example) is paused and cannot be restarted. This control will be explained in a modification.

The battery unit 100 also performs control depending on input current during charging, that is, charging current. Relatively large charging current means that the total amount of power generation of the private power generation modules 500 is larger than power consumed by the electric appliances 400 and that there tends to be excess power. In addition, when the charging current is large, storage batteries are likely to degrade fast. Power consumption of the electric appliances 400 is therefore encouraged so as to decrease the charging current.

The battery unit 100 further performs control depending on output current during discharging, that is, discharging current. Relatively large discharging current means that power consumed by the electric appliances 400 is larger than the total amount of power generation of the private power generation modules 500 and that there tends to be power shortage. In addition, when the discharging current is large, storage batteries are likely to degrade fast. Power consumption of the electric appliances 400 is therefore suppressed so as to decrease the discharging current.

Note that the aforementioned priority level may be roughly determined depending on the type of electric appliance 400. For example, when the priority is expressed in five levels, the highest priority level being "5" and the lowest priority level being "1", there is no problem in setting the priority level of the oxygen inhaler 402, which relates to health, to "5" and setting the priority level of the home game console 408, which relates to entertainment, to "1" in many cases. In a case where the oxygen inhaler 402 is used for relaxing or beauty, however, the priority level thereof need not be so high because there is no problem even if the oxygen inhaler 402 cannot be used occasionally. In a case of practice of a game for a competition, the priority level of the home game console 408 is high. Users, who are the residents, can modify the priority levels depending on such circumstances of the individual users.

As described above, the battery unit 100 controls power use of the electric appliances 400 through communication. Such control on power use includes not only simply stopping an electric appliance 400 when the condition has got worse but also resuming use of the stopped electric appliance 400 when the condition has got better. Thus, the battery unit 100 needs to always operate as a power use control system. Because the battery unit 100 is powered by the storage battery therein, the power use control system is not stopped by an external factor such as a failure of power transmission equipment. In addition, because the battery unit 100 is powered by direct current from the storage battery therein, conversion from direct current to alternating current or from alternating current to direct current need not be performed, and no energy loss is caused by such conversion. If a computer that functions as a power use control system is connected with an outlet 30 and powered by the battery unit 100 in a manner similar to the electric appliances 400, energy loss is caused by direct-current to alternating-current conversion at the power conditioner 600 and energy loss is caused by alternating-current to direct-current conversion performed by a converter in the computer. In the present embodiment, because these energy losses are not caused, power consumption necessary for the power use control system is reduced, which facilitates avoidance of such situation as loss of a control system.

FIG. 2 is a configuration diagram of the battery unit 100. The battery unit 100 includes an external supply power storage unit 102. The external supply power storage unit 102 is a lithium ion secondary battery or a lithium ion polymer secondary battery, for example. The types of the external supply power storage unit 102, however, are not limited. The external supply power storage unit 102 is used for supplying power to the electric appliances 400. Thus, unlike an internal supply storage battery included in a smartphone, the external supply power storage unit 102 has a large capacity.

The power input/output unit 104 is an interface for drawing power from the outside and discharging power to the outside. In other words, during charging, direct current from the power conditioner 600 is input to the power input/output unit 104. During discharging, direct current is output from the power input/output unit 104 to the power conditioner 600.

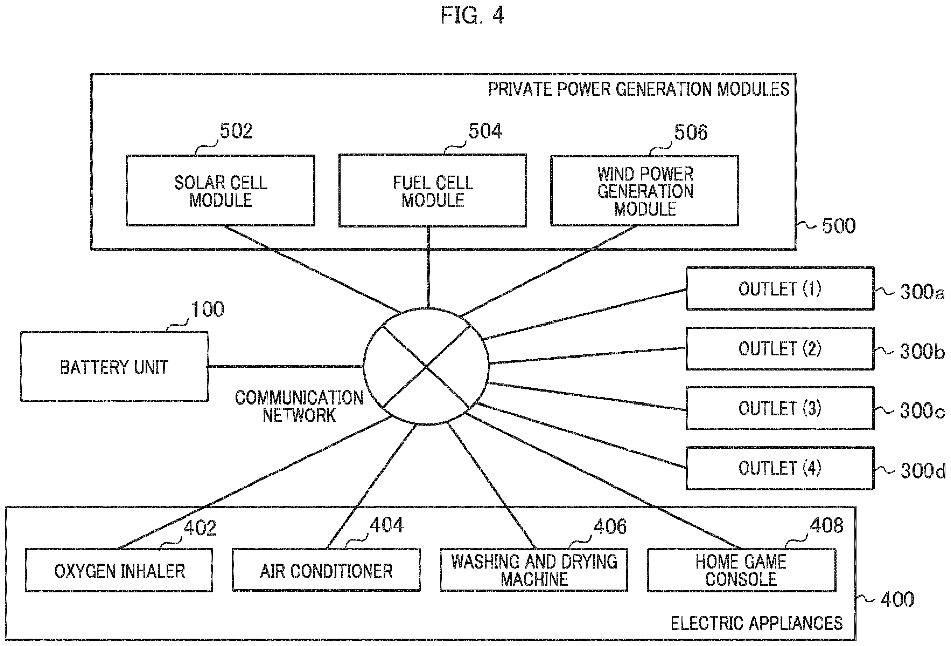

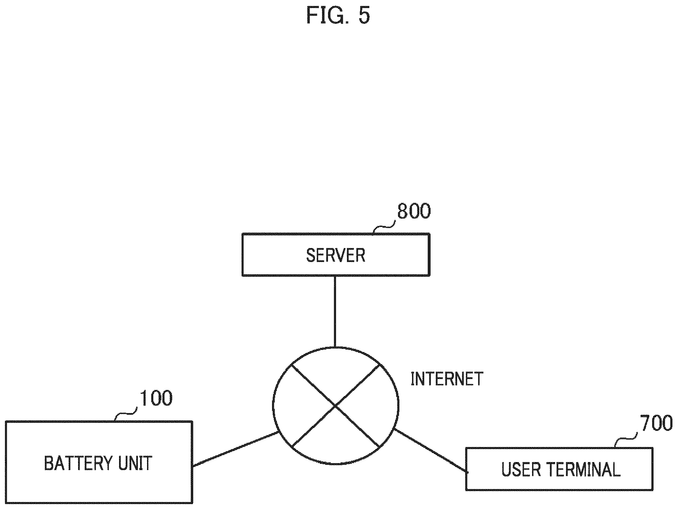

The battery unit 100 includes a communication module 106 for performing communication with external devices (the electric appliances 400 and the equipment components). The outline of communication will be described later with reference to FIGS. 4 and 5. Examples of the communication method that is used include mobile communication such as Long Term Evolution (LTE), the Internet, a wireless local area network (LAN), a wired LAN, near field communication such as Bluetooth Low Energy (BLE) and Wireless Smart Utility Network (Wi-SUN), and the like. The communication module 106 may use a plurality of communication methods in combination. Power line carrier communication may be used for part of communication paths. The communication module 106 includes a communication circuit conforming to the communication method. The communication module 106 includes a connector conforming to the communication method in a case of wire communication, or includes an antenna conforming to the communication method in a case of wireless communication. The communication module 106 is powered by the external supply power storage unit 102. In other words, the communication module 106 uses direct current supplied from the external supply power storage unit 102.

The battery unit 100 includes a memory unit 108 for storing various kinds of information and programs. For the memory unit 108, a memory device such as a random access memory (RAM), a read only memory (ROM), a flash memory, or a hard disk drive (HDD) is used. A plurality of types of memory devices may be used in combination. The memory unit 108 is not limited to a built-in memory device, but may be a removable memory device such as a universal serial bus (USB). The memory unit 108 is powered by the external supply power storage unit 102. In other words, the memory unit 108 uses direct current supplied from the external supply power storage unit 102.

The battery unit 100 includes a processor 112 that performs control processes. For the processor 112, a general-purpose processor such as a central processing unit
(CPU), a coprocessor, a graphics processing unit (GPU), a tensor processing unit (TPU), a field-programmable gate array (FPGA), or the like is used. The processor 112 is also powered by the external supply power storage unit 102. In other words, the processor 112 uses direct current supplied from the external supply power storage unit 102. Alternatively, the battery unit 100 may include the processor 112 and a microcontroller integrated with the processor 112.

The battery unit 100 includes a sensor 110 for measuring current (storage current), power (storage power), and voltage (storage voltage) during power storage, current (discharging current), power (discharging power), and voltage (discharging voltage) during discharging, further a power storage rate in the external supply power storage unit 102, and the like. A result of measurement of the sensor 110 is passed to the processor 112. The sensor 110 is powered by the external supply power storage unit 102. In other words, the sensor 110 uses direct current supplied from the external supply power storage unit 102.

The external supply power storage unit 102 may include a plurality of storage batteries, so that, while one of the storage batteries is charged, another storage battery discharges power to be used in the battery unit.

FIG. 3 is a configuration diagram of an outlet 300. The outlet 300 includes a switch 302 for connecting and disconnecting a power line to an electric appliance 400. When the switch 302 is closed, alternating current transmitted from the distribution board 200 flows to the electric appliance 400. When the switch 302 is opened, the alternating current to the electric appliances 400 is interrupted. The outlet 300 also includes a current sensor 304 for measuring the alternating current flowing to the electric appliance 400.

The outlet 300 further includes a communication module 306 for performing communication with the communication module 106 of the battery unit 100. The communication module 306 transmits a current value measured by the current sensor 304 to the battery unit 100, and receives an instruction signal to open or close the switch 302 from the battery unit 100. When the communication module 306 has received an instruction signal to open the switch 302, the switch 302 is opened. When the communication module 306 has received an instruction signal to close the switch 302, the switch 302 is closed.

FIG. 4 is an outline diagram of communication in the power equipment. The private power generation modules 500 such as the solar cell module 502, the fuel cell module 504, and the wind power generation module 506 each include a communication module for performing communication with the communication module 106 of the battery unit 100. The electric appliances 400 such as the oxygen inhaler 402, the air conditioner 404, the washing and drying machine 406, and the home game console 408 also each include a communication module for performing communication with the communication module 106 of the battery unit 100.

In addition, the power conditioner 600 and the distribution board 200 may each include a communication module for performing communication with the communication module 106 of the battery unit 100. The battery unit 100 may obtain information relating to the performances and the states of the power conditioner 600 and the distribution board 200 and instruct the power conditioner 600 and the distribution board 200 to perform operation.

The external devices (the electric appliances 400 and the equipment components) described above may use the same communication methods as each other or different communication methods for communication with the battery unit 100.

FIG. 5 is an outline diagram of communication outside the power equipment. The battery unit 100 can perform communication with a user terminal 700 used by the residents. The user terminal 700 is a smartphone, a tablet terminal, a personal computer, or the like. The battery unit 100 can provide information to the user terminal 700 and obtain instructions and information relating to settings from the user terminal 700.

The battery unit 100 can communicate with a server 800. The battery unit 100 can obtain information from and provide information to the server 800.

Information uploaded from the user terminal 700 to the server 800 may be downloaded by the battery unit 100. In addition, information uploaded by the battery unit 100 to the server 800 may be downloaded by the user terminal 700. The user terminal 700 and the battery unit 100 may communicate via the server 800.

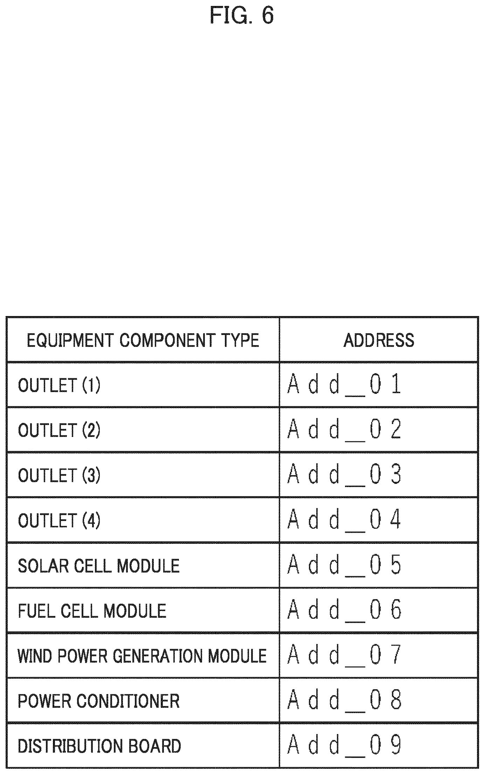

FIG. 6 is a data structure diagram of an equipment component table. The battery unit 100 holds the equipment component table. The equipment component table includes records of each equipment component. In the records, the type of each equipment component and the address of each equipment component are set. In this example, the equipment components are four outlets 300a to 300d, the solar cell module 502, the fuel cell module 504, the wind power generation module 506, the power conditioner 600, and the distribution board 200. Although not illustrated, the records may include specification information of each equipment component. The address is an example of an ID for identifying a communication counterpart in conformity with the communication method. IDs other than addresses may be used depending on the communication method. In the following description, the ID of a communication counterpart is an address. The equipment component table is assumed to be obtained from the user terminal 700 or the server 800.

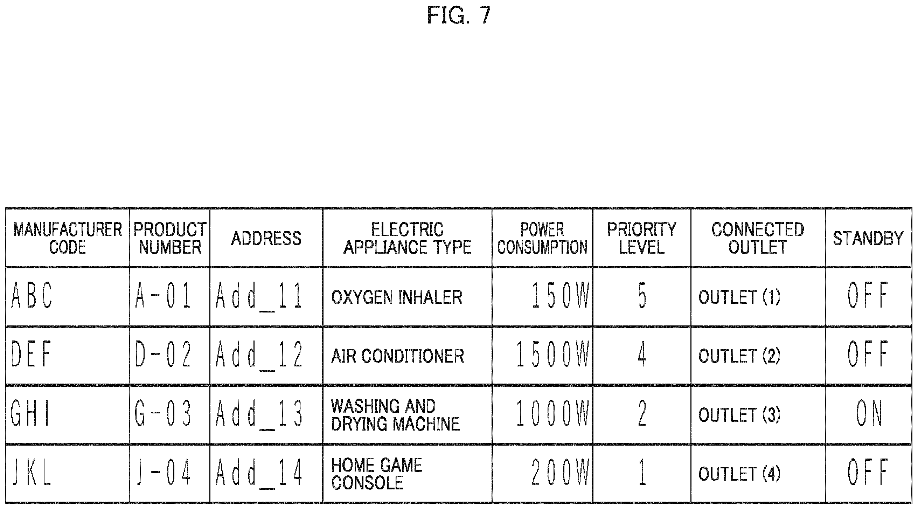

FIG. 7 is a data structure diagram of an electric appliance table. The battery unit 100 holds the electric appliance table. The electric appliance table includes records of each electric appliance 400. In the records, the manufacturer code, the product number (or a product name), the address, the electric appliance type, the power consumption, the priority level, the connected outlet, and the standby flag are set. The manufacturer code, the product number (or the product name), and the address are identified by responses to queries from the battery unit 100. The specification including the electric appliance type, the power consumption, and others is obtained by sending queries to the server 800.

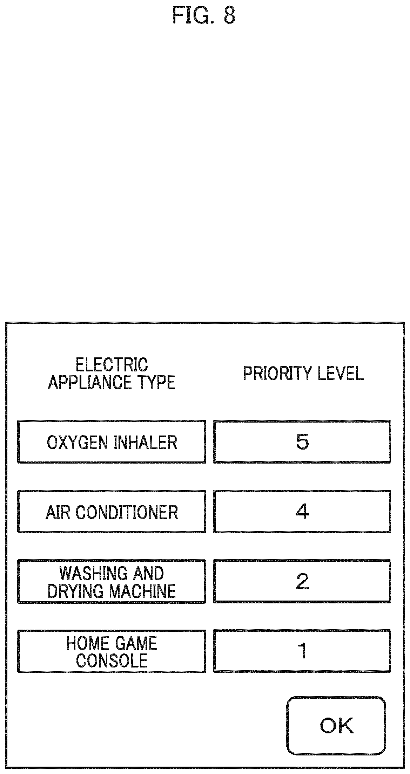

The priority level is first set to a default level determined depending on the electric appliance type. The residents can modify each priority level by using the user terminal 700. When a priority level is not modified, the default priority level is used without being changed. The procedures for modifying a priority level will be described later with reference to FIG. 8.

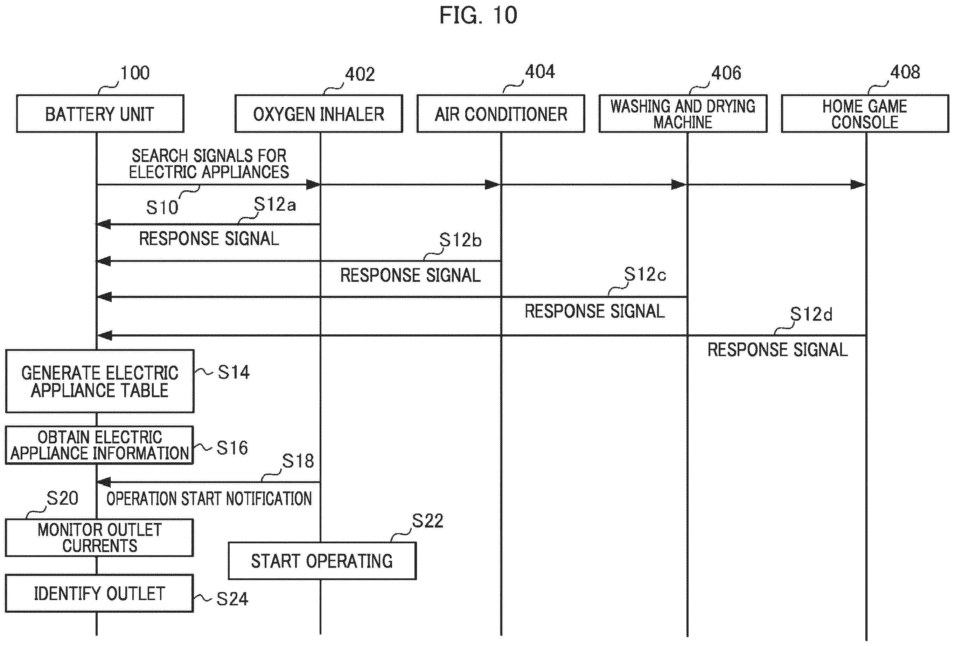

The connected outlet is the outlet 300 to which the electric appliance 400 is connected. For example, it is indicated that the oxygen inhaler 402 is connected to the outlet (1) (the outlet 300a in FIG. 1). The procedures for identifying a connected outlet will be described later with reference to FIG. 10.

When a reservation of operation is set on an electric appliance 400, notification of the set reservation is provided to the battery unit 100, and the standby flag is turned on. For example, when the mother sets a reservation to start washing at 11 a.m. on the washing and drying machine 406, the standby flag of the washing and drying machine 406 is turned on. When the electric appliance 400 completes the reserved operation, notification of the completion of the reserved operation is provided to the battery unit 100, and the standby flag is turned off. The standby flag of an electric appliance 400 having no reservation setting function remains off.

FIG. 8 is a screen diagram of an appliance setting screen. The appliance setting screen is displayed on the user terminal 700. The appliance setting screen displays the types (or the product names) of the electric appliances 400 in the home, and the priority levels thereof. Initially, default priority levels set by the battery unit 100 are displayed. When a user changes the value of a priority level and touches an OK button, notification of a changed priority level is provided to the battery unit 100, and the electric appliance table is updated.

For example, if the grandfather has recovered from his illness and the oxygen inhaler 402 is only used by the father during a nap, the priority level of the oxygen inhaler 402 may be set to "1". In addition, when a game is to be played by the child and his friends in a birthday party, the priority level of the home game console 408 may be raised to "5". This prevents the game play from being paused and spoiled during the party even if the SOC lowers. Instead, even if the oxygen inhaler 402 is stopped, the father's rest is not very much affected.

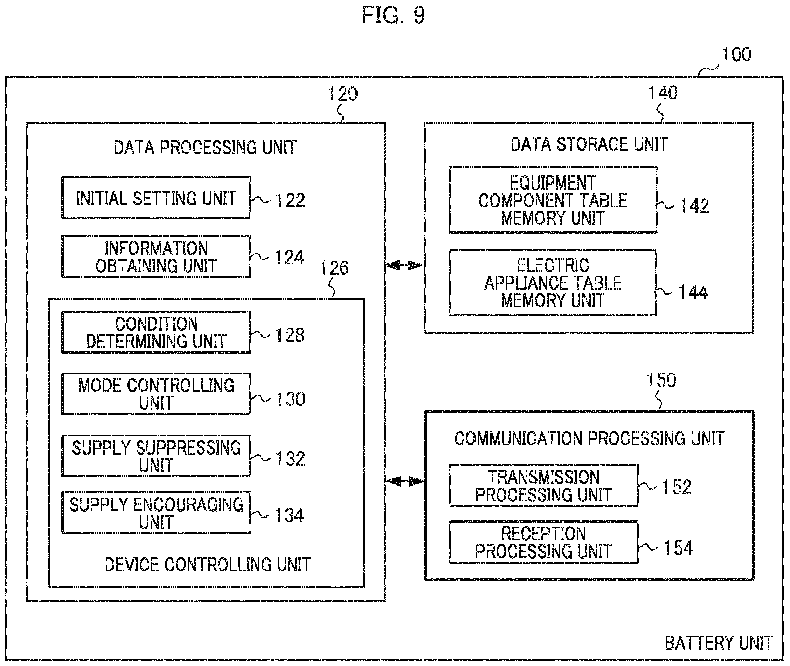

FIG. 9 is a functional block diagram of the battery unit 100. A data processing unit 120 is implemented by the processor 112 by sequentially reading and executing codes of programs stored in the memory unit 108. A data area used for execution of programs is also allocated in the memory unit 108. A data storage unit 140 is implemented by the memory unit 108. A communication processing unit 150 is implemented by the processor 112 by sequentially reading and executing program codes for a communication interface stored in the memory unit 108 and controlling the communication module 106. In other words, the communication processing unit 150 is implemented by the processor 112 and the communication module 106 in cooperation with each other.

The data processing unit 120 includes an initial setting unit 122, an information obtaining unit 124, and a device controlling unit 126. The initial setting unit 122 performs initial setting on information of the external devices (the electric appliances 400 and the equipment components). The information obtaining unit 124 obtains information from the external devices. The device controlling unit 126 controls the external devices.

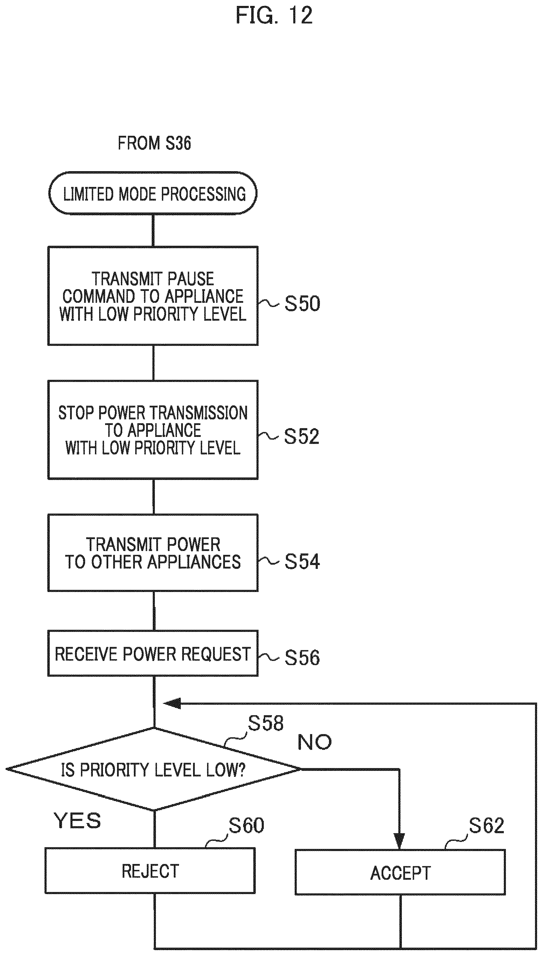

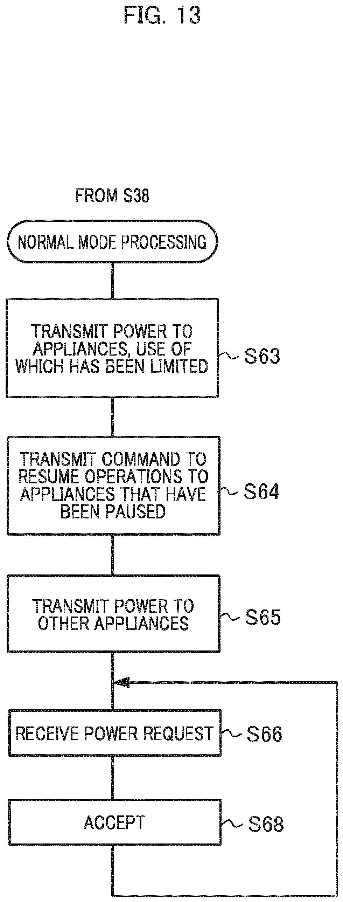

The device controlling unit 126 includes a condition determining unit 128, a mode controlling unit 130, a supply suppressing unit 132 and a supply encouraging unit 134.
The condition determining unit 128 determines a condition for controlling the external devices (the electric appliances 400 and the equipment components). The mode controlling unit 130 controls the mode of the power use control system. In this example, a normal mode and a limited mode are present. In the normal mode, any electric appliance 400 can freely use power. In the limited mode, power use of an electric appliance 400 with a low priority level is limited. Normal mode processing will be described later with reference to FIG. 13. Limited mode processing will be described later with reference to FIG. 12. The supply suppressing unit 132 performs processes for suppressing power supply to the electric appliances 400. The supply encouraging unit 134 performs processes for encouraging power supply to the electric appliances 400.

The data storage unit 140 includes an equipment component table memory unit 142 and an electric appliance table memory unit 144. The equipment component table memory unit 142 stores the equipment component table (FIG. 6). The initial setting unit 122 obtains data relating to the equipment component table from the server 800 or the user terminal 700, and causes the equipment component table to be stored. The electric appliance table memory unit 144 stores the electric appliance table (FIG. 7). The initial setting unit 122 generates the electric appliance table in a preparation phase, which will be described with reference to FIG. 10. Alternatively, the initial setting unit 122 may obtain data relating to the electric appliance table from the server 800 or the user terminal 700, and cause the electric appliance table to be stored.

The communication processing unit 150 includes a transmission processing unit 152 and a reception processing unit 154.
As illustrated in FIGS. 4 and 5, the transmission processing unit 152 transmits various data to the electric appliances 400 (the oxygen inhaler 402, the air conditioner 404, the washing and drying machine 406, and the home game console 408), the equipment components (the outlets 300a to 300d, the solar cell module 502, the fuel cell module 504, the wind power generation module 506, the power conditioner 600, and the distribution board 200), the user terminal 700, and the server 800. As illustrated in FIGS. 4 and 5, the reception processing unit 154 receives various data from the electric appliances 400 (the oxygen inhaler 402, the air conditioner 404, the washing and drying machine 406, and the home game console 408), the equipment components (the outlets 300a to 300d, the solar cell module 502, the fuel cell module 504, the wind power generation module 506, the power conditioner 600, and the distribution board 200), the user terminal 700, and the server 800.

FIG. 10 is a sequence diagram of the preparation phase. In the preparation phase, the battery unit 100 generates the electric appliance table. This is an example of the method for obtaining the electric appliance table.

Initially, the battery unit 100 does not recognize what electric appliances 400 are present in the home. The battery unit 100 therefore transmits (broadcasts) search signals for electric appliances simultaneously from transmission processing unit 152 to search for the electric appliances 400 in the home (S10). In a case of wireless LAN, the battery unit 100 may transmit beacon signals as the search signals from access points. In a case of BLE, the battery unit 100 may transmit beacon signals as the search signals from a beacon terminal.

Each electric appliance 400 in receipt of a search signal returns a response signal to notify the battery unit 100 of its presence. In this example, the oxygen inhaler 402, the air conditioner 404, the washing and drying machine 406, and the home game console 408 return response signals (S12a to S12d). A response signal includes at least an address. In this example, a response signal includes a manufacturer code and a product number (or a product name). If a response signal does not include a manufacturer code and a product number (or a product name), a new query may be sent to the address. In the case of the wireless LAN, the battery unit 100 may obtain a response signal received at an access point. In the case of BLE, the battery unit 100 may obtain a response signal received by the beacon terminal.

When the reception processing unit 154 of the battery unit 100 has received the response signals (S12), the initial setting unit 122 generates an electric appliance table including records of each electric appliance 400 (S14). In the individual records, a manufacturer code, a product number (or a product name) and an address are set.

The initial setting unit 122 obtains information on the electric appliances from the server 800 (S16). Specifically, a request for electric appliance information specifying a manufacturer code and a product number (or a product name) is transmitted from the transmission processing unit 152 to the server 800, and a response on the electric appliance information is received by the reception processing unit 154. While an electric appliance type and a power consumption are obtained as the electric appliance information in this example, other specifications may be obtained. The electric appliance information is stored in the electric appliance table.

When starting operating, each electric appliance 400 transmits an operation start notification to the battery unit 100 (S18). For example, when a start button of the oxygen inhaler 402 is pressed, the oxygen inhaler 402 transmits an operation start notification to the battery unit 100, and starts operation of concentrating and discharging oxygen a moment later.

When the reception processing unit 154 of the battery unit 100 has received an operation start notification from an electric appliance 400, the initial setting unit 122 monitors changes in the current values at the individual outlets 300a to 300d (S20).

When the oxygen inhaler 402 starts operating (S22), current flows through the outlet 300a to which the oxygen inhaler 402 is connected, and the current value increases with the power consumption of the oxygen inhaler 402. Because the current value at the outlet 300a has increased by an amount corresponding to the power consumption of the oxygen inhaler 402, the initial setting unit 122 determines that the oxygen inhaler 402 is connected to the outlet 300a (S24). The initial setting unit 122 then sets outlet (1) corresponding to the outlet 300a for the oxygen inhaler 402 in the electric appliance table. When any other electric appliance 400 starts operating, a connected outlet is identified in a similar manner.

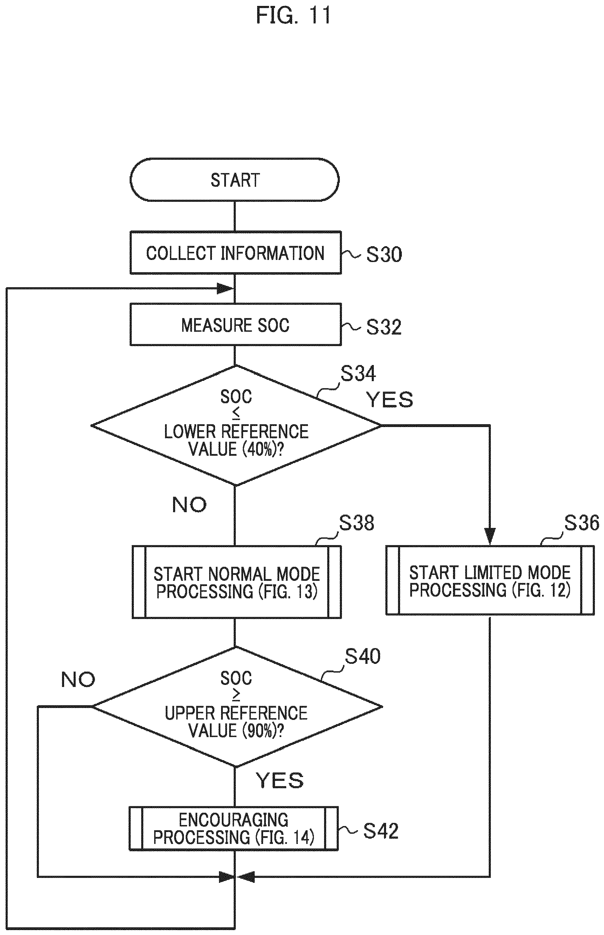

FIG. 11 is a flowchart illustrating processes of main processing in the embodiment.
After the preparation phase is ended, the battery unit 100 performs the main processing in an operation stage. The information obtaining unit 124 continuously collects information on operation statuses of the electric appliances and the equipment components from the electric appliances and the equipment components (S30). For example, the information obtaining unit 124 obtains notifications of operation starts, operation ends, reservation settings, and reserved operation completions, power consumptions, and the like from the oxygen inhaler 402, the air conditioner 404, the washing and drying machine 406, and the home game console 408. The information obtaining unit 124 obtains current values and the like from the outlets 300a to 300d. The information obtaining unit 124 obtains the amounts of power generation from the solar cell module 502, the fuel cell module 504, and the wind power generation module 506. The information obtaining unit 124 obtains the total amount of power generation and the total amount of power consumption from the power conditioner 600. The information obtaining unit 124 obtains the values of current flowing through the individual outlets from the distribution board 200. Other information may be obtained. The transmission processing unit 152 of the battery unit 100 may periodically request the electric appliances 400 and the equipment components to respond, or the electric appliances 400 and the equipment components may autonomously provide new information. In any case, the information obtaining unit 124 continuously collects information, so that at least latest information can be used.

The condition determining unit 128 measures the SOC of the external supply power storage unit 102 by using the sensor 110 (S32). The condition determining unit 128 determines whether or not the SOC is equal to or lower than a lower reference value (S34). The lower reference value is a value that is a reference for determining whether or not there is a concern about shortage in the charge amount. In this example, an SOC of 40% or lower is a level at which there is a concern about shortage in the charge amount.

When the SOC has become equal to or lower than the lower reference value, the mode controlling unit 130 stops the normal mode processing and starts the limited mode processing to limit the use of the electric appliances 400 (S36). The limited mode processing is processing continued in the limited mode and performed in parallel with the main processing. Thus, when the limited mode processing is started, the process returns to S32 without waiting for the limited mode processing to end. The limited mode processing will be described later with reference to FIG. 12. When the limited mode is already entered, that is, when the limited mode processing is being performed, the process directly returns to S32.

When the SOC has exceeded the lower reference value, the limitation on the use of the electric appliances 400 may be cancelled. The mode controlling unit 130 therefore stops the limited mode processing and starts the normal mode processing (S38). The normal mode processing is processing continued in the normal mode and performed in parallel with the main processing. Thus, when the normal mode processing is started, the process proceeds to the next process without waiting for the normal mode processing to end. The normal mode processing will be described later with reference to FIG. 13. When the normal mode is already entered, that is, when the normal mode processing is being performed, the process directly proceeds to the next process.

The condition determining unit 128 determines whether or not the SOC is equal to or higher than an upper reference value (S40). The upper reference value is a value that is a reference for determining whether or not there is a concern about overcharging. In this example, an SOC of 90% or higher is a level at which there is a concern about overcharging.

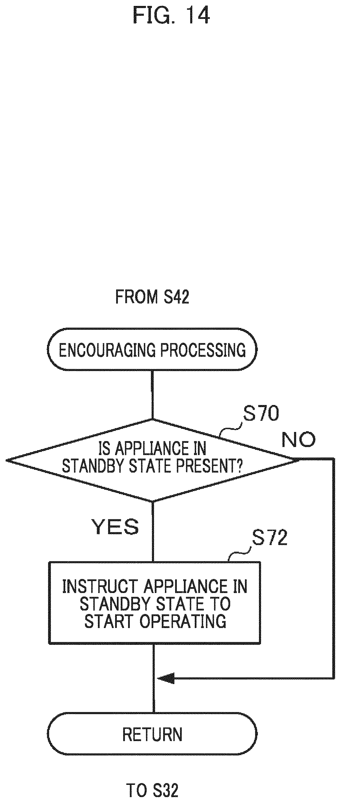

When the SOC is equal to or higher than the upper reference value, the supply encouraging unit 134 performs encouraging processing (S42) to encourage power supply. The encouraging processing will be described later with reference to FIG. 14. The process then returns to S32. When the SOC is lower than the upper reference value, there is no concern about overcharging, and the process therefore directly returns to S32.

FIG. 12 is a flowchart illustrating processes of the limited mode processing.
In the limited mode, operation of an electric appliance 400 with a low priority level is restricted. The mode controlling unit 130 selects an electric appliance 400 with a low priority level. In this example, an electric appliance 400 with the priority level 1 is selected. In the example of FIG. 7, the home game console 408 is selected. The mode controlling unit 130 pauses operation of the selected electric appliance 400. Specifically, the transmission processing unit 152 transmits a command to pause the operation (S50). The mode controlling unit 130 may stop the operation of the selected electric appliance 400 with a low priority level. Specifically, the transmission processing unit 152 may transmit a command to stop the operation. Still alternatively, the mode controlling unit 130 may inhibit the operation of the selected electric appliance 400 with a low priority level. Specifically, the transmission processing unit 152 may transmit a command to inhibit the operation.

In addition, the mode controlling unit 130 stops power transmission to the selected electric appliance 400 (S52). Specifically, the transmission processing unit 152 instructs the outlet to which the selected electric appliance 400 is connected to open the switch 302. When the outlet 300 in receipt of the instruction opens the switch 302, power supply to the electric appliance 400 with a low priority level is stopped. Thus, even when a user turns the power switch of the off and on, the electric appliance 400 is not activated. In addition, even when the selected electric appliance 400 does not have a pause function or an operation inhibiting function, the electric appliance 400 can be forced not to operate.

The mode controlling unit 130 transmits power to unselected electric appliances 400 (S54). Specifically, the transmission processing unit 152 transmits an instruction signal instructing to close the switch 302 to each of the outlets 300 other than the connected outlet to which the electric appliance 400 with a low priority level is connected. The outlets 300 in receipt of the instruction each close the switch 302, so that power is supplied thereto. If the switch 302 is already closed, power transmission is continued.

When it is assumed that an electric appliance 400 has a function of requesting power supply, the electric appliance 400 may transmit a power request to the battery unit 100 during the limited mode. If the electric appliance 400 requesting power supply is the selected electric appliance 400 with a low priority level, however, the battery unit 100 does not respond to the power request. Thus, when the reception processing unit 154 has received a power request (S56), the mode controlling unit 130 determines whether or not the requesting electric appliance 400 is the selected electric appliance 400 with a low priority level (S58).

If the requesting electric appliance 400 is the selected electric appliance 400 with a low priority level, the mode controlling unit 130 rejects power supply (S60). In other words, the transmission processing unit 152 transmits a notification on rejection of power supply. The electric appliance 400 in receipt of the rejection cannot start operating because power supply is not resumed.

In contrast, if the requesting electric appliance 400 is not the selected electric appliance 400 with a low priority level, the mode controlling unit 130 accepts power supply (S62). In other words, the transmission processing unit 152 transmits a notification on acceptance of power supply. The transmission processing unit 152 then transmits an instruction signal instructing to close the switch 302 to the outlet to which the electric appliance 400 is connected. For example, in a case where an electric appliance 400 with a high priority level and an electric appliance 400 with a low priority level are connected to a power strip and used at the same time, when the outlet to which the electric appliance 400 with a low priority level is connected is shut off, the electric appliance 400 with a high priority level also becomes unable to be used. Even when power transmission to an electric appliance 400 with a high priority level is stopped for some reason as described above, power transmission to the electric appliance 400 can be resumed by newly requesting power, so that the electric appliance 400 can operate. For example, in a case where a laptop computer with a priority level of 2 or higher, which uses the same power strip as the home game console 408 whose operation is paused due to the limited mode, is turned on, the laptop computer is started by power from an internal battery thereof, and transmits a power request to the battery unit 100, so that power supply can be received through the outlet. Alternatively, if the requesting electric appliance 400 is not the selected electric appliance 400 with a low priority level (No in S58), the processes from S30 in FIG. 11 may be performed without the process (S62) of accepting power supply.

The process returns to S58 and the aforementioned processes are repeated until the limited mode processing is terminated.

While an example of a one-step limited mode has been described above, a multiple-step limited mode may be provided. For example, in a case where a five-step limited mode is employed, five lower reference values such as 40%, 30%, 20%, 10%, and 5% are provided. Then, use of electric appliances 400 with a priority level of 1 (the home game console 408, for example) is limited when the SOC is 40% or lower, use of electric appliances 400 with a priority level of 2 or lower (the washing and drying machine 406, for example) is limited when the SOC is 30% or lower, use of electric appliances 400 with a priority level of 3 or lower is limited when the SOC is 20% or lower, use of electric appliances 400 with a priority level of 4 or lower (the air conditioner 404, for example) is limited when the SOC is 10% or lower, and use of all the electric appliances 400 (the oxygen inhaler 402, for example) is limited when the SOC is 5% or lower. Even when the SOC is 5% or lower, however, the processing of the control system in the battery unit 100 is continued.

FIG. 13 is a flowchart illustrating processes of the normal mode processing.
The mode controlling unit 130 transmits power to the electric appliances 400, use of which has been limited during the limited mode because of low priority levels (S63). Specifically, the transmission processing unit 152 transmits an instruction signal instructing to close the switch 302 to the outlets to which the electric appliances 400 with low priority levels are connected. When each outlet 300 in receipt of the instruction closes the switch 302, power supply therethrough is resumed.

The mode controlling unit 130 resumes the operations of the electric appliances 400, which have been paused during the limited mode because of low priority levels (S64). Specifically, the transmission processing unit 152 transmits a command to resume operation to each of the electric appliances 400 that have been paused. The transmission processing unit 152 further transmits a command to cancel inhibition of operation to each of the electric appliances 400 to which the instruction to inhibit the operation thereof has been transmitted.

The mode controlling unit 130 continues power transmission to electric appliances 400, use of which has not been limited (S65).

In the normal mode, a power request received from any of the electric appliances 400 (S66) is accepted (S68). Even a power request from an electric appliance 400 with a priority level of 1 is not rejected.

FIG. 14 is a flowchart illustrating processes of the encouraging processing.

The supply encouraging unit 134 determines whether or not an electric appliance 400 with the standby flag being on is present (S70). If an electric appliance 400 with the standby flag being on is present, the electric appliance 400 in the standby state is instructed to start operating (S72). Specifically, the transmission processing unit 152 transmits an operation start command to the electric appliance 400. The electric appliance 400 in receipt of the operation start command starts the operation of which reservation is set.

### [Modifications]

While an example in which the mode is switched on the basis of the state of charge (SOC) has been presented in the embodiment, the mode may be switched on the basis of the total amount of power generation of the private power generation modules 500.

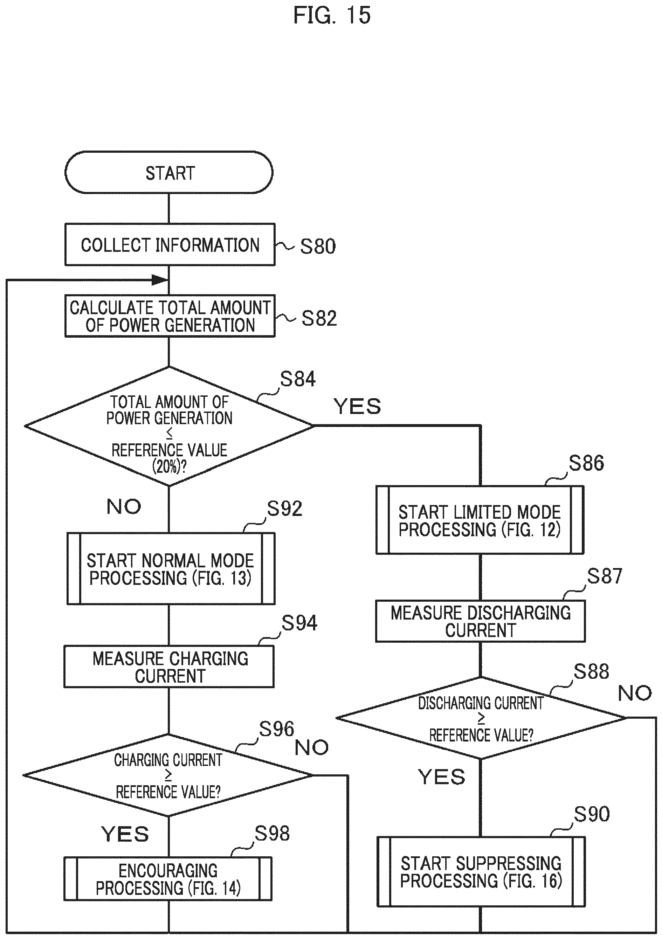

FIG. 15 is a flowchart illustrating processes of main processing according to a modification.

The information obtaining unit 124 collects information in the same manner as in the embodiment (S80).

The condition determining unit 128 calculates the total amount of power generation of the private power generation modules 500 (S82). The condition determining unit 128 obtains the amounts of power generation from the solar cell module 502, the fuel cell module 504, and the wind power generation module 506, and calculates a sum thereof. The total amount of power generation of the solar cell module 502, the fuel cell module 504, and the wind power generation module 506 may be obtained from the power conditioner 600.

The condition determining unit 128 determines whether or not the total amount of power generation is equal to or smaller than a reference value (S84). The reference value is a value that is a reference for determining whether or not power generation is insufficient. If the total amount of power generation is equal to or smaller than the reference value, power generation is insufficient, and the use of electric appliances 400 is therefore to be limited. Thus, the mode controlling unit 130 starts the limited mode processing in a manner similar to the embodiment (S86).

When the total amount of power generation is small, the external supply power storage unit 102 may discharge to make up for power shortage. The condition determining unit 128 measures discharging current at the external supply power storage unit 102 by using the sensor 110. The condition determining unit 128 determines whether or not the discharging current equal to or larger than a reference value (S88). The reference value is a value that is a reference for determining whether or not the discharging pace is too fast. When the discharging pace is too fast, there is a problem in that the external supply power storage unit 102 is likely to degrade fast. In addition, the external supply power storage unit 102 may run out of power.

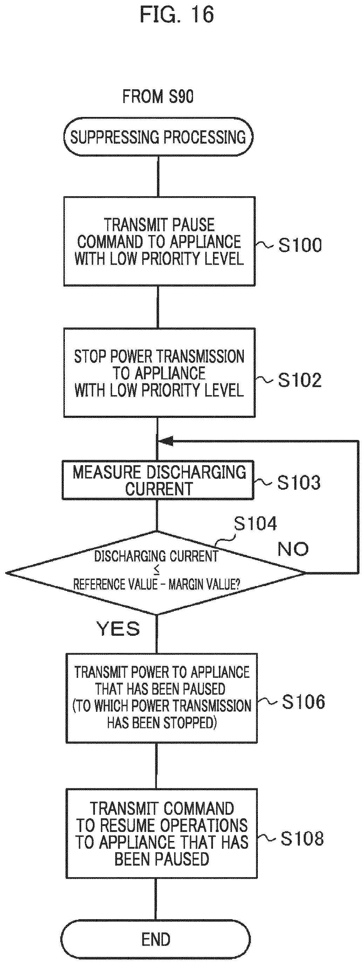

If the discharging current is equal to or larger than the reference value, the supply suppressing unit 132 starts suppressing processing (S90). In the suppressing processing, use of additional electric appliances 400 is limited, so as to suppress power supply. The suppressing processing will be described later with reference to FIG. 16. If the discharging current is smaller than the reference value, the suppressing processing need not be performed. The process then returns to S82.

The description refers back to S84. If the total amount of power generation is determined to exceed the reference value, the mode controlling unit 130 starts the normal mode processing (S92) in a manner similar to the embodiment.

When the total amount of power generation is large, excess power that has not been consumed may be stored in the external supply power storage unit 102. The condition determining unit 128 measures the charging current at the external supply power storage unit 102 by using the sensor 110 (S94). The condition determining unit 128 determines whether or not the charging current is equal to or larger than a reference value (S96). The reference value is a value that is a reference for determining whether or not the charging pace is too fast. When the charging pace is too fast, there is a problem in that the external supply power storage unit 102 is likely to degrade fast. In addition, when the external supply power storage unit 102 is fully charged, generated power will be wasted.

If the charging current is equal to or larger than the reference value, power supply to electric appliances 400 is encouraged to slow the charging pace.
In other words, the supply encouraging unit 134 performs the encouraging processing (S98). The encouraging processing is similar to that in the embodiment.

FIG. 16 is a flowchart illustrating processes of the suppressing processi ng.
The supply suppressing unit 132 selects an electric appliance 400 with a low priority level from among electric appliances 400 that are not limited to be used in the limited mode. For example, in a case where electric appliances 400 with a priority level of 1 (the home game console 408, for example) are selected in the limited mode processing, electric appliances 400 with a priority level of 2 (the washing and drying machine 406, for example) are selected in the suppressing processing. As a result, the washing and drying machine 406, in addition to the home game console 408, cannot be operated.

The supply suppressing unit 132 pauses the operation of the selected electric appliance 400 (the washing and drying machine 406, for example). Specifically, the transmission processing unit 152 transmits a command to pause operation (S100). The supply suppressing unit 132 may stop the operation of the selected electric appliance 400 with a low priority level. Specifically, the transmission processing unit 152 may transmit a command to stop the operation. Still alternatively, the supply suppressing unit 132 may inhibit the operation of the selected electric appliance 400 with a low priority level. Specifically, the transmission processing unit 152 may transmit a command to inhibit the operation.

The supply suppressing unit 132 stops power transmission to the selected electric appliance 400 (S102). Specifically, the transmission processing unit 152 instructs the outlet to which the selected electric appliance 400 is connected to open the switch 302.

If the air conditioner 404 that has been operating is stopped after the use of the home game console 408 and the washing and drying machine 406 is limited, the power consumption is lowered. This applies to a case where the cooling operation of the air conditioner 404 is stopped in summer evenings, for example. As a result, the discharging current is also decreased, and the washing and drying machine 406 may therefore be operated again. In this example, because the power consumption of the air conditioner 404 is 1500 W, even if the washing and drying machine 406 consumes a power of 1000 W instead, the power consumption as a whole is reduced. The discharging load of the external supply power storage unit 102 is therefore reduced.

Thus, the battery unit 100 continues observation of the discharging current. Specifically, the supply suppressing unit 132 measures the discharging current at the external supply power storage unit 102 by using the sensor 110 (S103). The supply suppressing unit 132 determines whether or not the discharging current is equal to or smaller than "(the reference value) - (a margin value)" (S104). The margin value is set to stabilize the control by the suppressing processing. If the discharging current does not become equal to or smaller than "(the reference value) - (a margin value)" (No in S104), the use of electric appliances 400 is continuously limited.

If the discharging current becomes equal to or smaller than "(the reference value) - (a margin value)" (Yes in S104), the supply suppressing unit 132 resumes power transmission that has been interrupted in S102 (S106).
Specifically, the transmission processing unit 152 transmits an instruction signal instructing to close the switch 302 to the outlet to which the electric appliance 400, for which the limitation of use is to be cancelled, is connected.

The supply suppressing unit 132 then transmits a command to resume operation to the electric appliance 400 (the washing and drying machine 406, for example), which has been paused in S100 (S108). Upon receiving the command, the electric appliance 400 resumes the operation. The supply suppressing unit 132 also cancels the inhibition command.

In relation to FIG. 1, a smart meter may be provided between the battery unit 100 and the power conditioner 600.

Although an off-grid example is illustrated in FIG. 1, the power equipment need not be off-grid. In other words, power lines may be drawn from a power grid provided by an electric power company, so that power can be received externally.

In relation to FIG. 7, a priority order may be set instead of the priority levels. In this case, a process of selecting an electric appliance 400 that is low in the priority order may be performed instead of the process of selecting an electric appliance 400 with a low priority level.

While an example in which the control processes are performed on the electric appliances 400 and the outlets 300 has been presented with reference to the limited mode processing (FIG. 12), the normal mode processing (FIG. 13), and the suppressing processing (FIG. 16), control processes may be performed only on the electric appliances 400. Alternatively, control processes may be performed only on the outlets 300.

While an example in which an outlet 300 is controlled so as to interrupt power transmission to an electric appliance 400 has been presented, the distribution board 200 may be controlled so as to interrupt power transmission to an electric appliance 400. Specifically, a communication module 306 and a switch 302 may be provided on each of power lines that branch off in the distribution board 200, and the battery unit 100 may interrupt power transmission through each of the power lines. Alternatively, the configuration of the distribution board 200 including the communication modules 306 and the switches 302 may be included in the battery unit 100, so that the battery unit 100 itself may interrupt power transmission to each outlet.

A power strip may be controlled so as to interrupt power transmission to an electric appliance 400. Specifically, a communication module 306 and a switch 302 may be provided on each socket of a power strip, and the battery unit 100 may interrupt power transmission to each of the sockets.

The status of control performed by the battery unit 100 may be checked by the residents by using the user terminal 700.

While an example of a home has been presented, other facilities are also applicable. For example, a store, a factory, an accommodation facility, a public facility, or the like may be applied. In addition, the electric appliances 400 are not limited to household appliances, but may be commercial devices.

The battery unit 100 can also be used in things other than ground facilities. For example, the battery unit 100 may be used in a car, a ship, or an air vehicle.

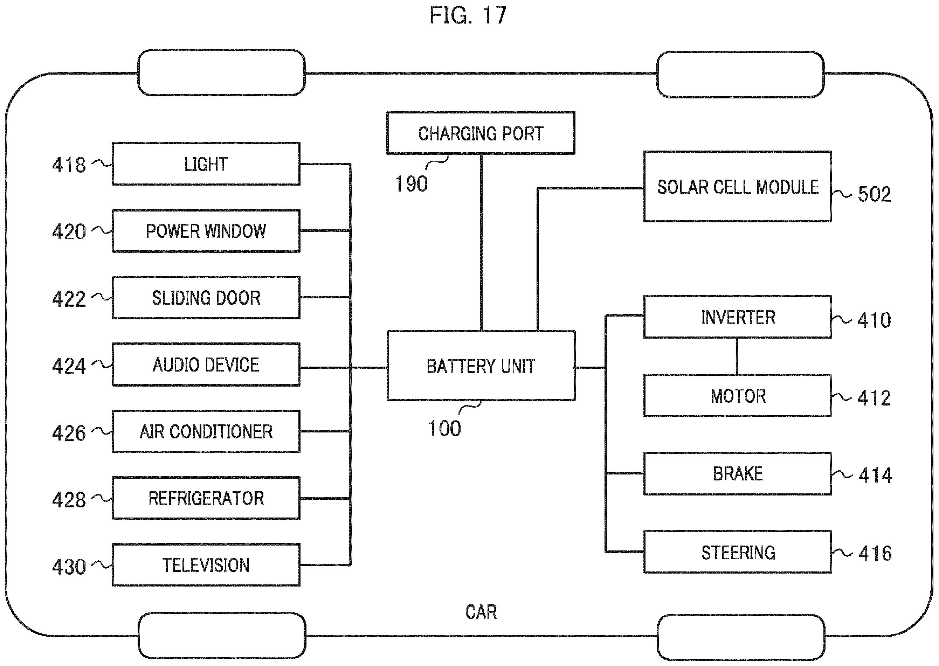

FIG. 17 is a configuration diagram of power equipment of a car. The battery unit 100 is charged by power supplied through a charging port 190 and power generated by the solar cell module 502. The battery unit 100 then discharges to supply power to a motor 412, a brake 414, a steering 416, a light 418, a power window 420, a sliding door 422, an audio device 424, an air conditioner 426, a refrigerator 428, and a television 430, which are electric appliances (devices) 400. For electric appliances (devices) 400, such as the motor 412, which are operated or driven by alternating current, direct current is converted to alternating current by an inverter 410. Other inverters are not illustrated. The car moves forward and backward by rotating tires by the motor 412.

In addition, the battery unit 100 performs control on the power use on the basis of priority levels set for the individual electric appliances (devices) 400 in a manner similar to the case of a home. For example, the motor 412, the steering 416, the brake 414, and the light 418 are set to have high priority levels, the air conditioner 426, the refrigerator 428, the power window 420, and the sliding door 422 are set to have intermediate priority levels, and the audio device 424 and the television 430 are set to have low priority levels. As a result, when the SOC has lowered, the audio device 424 stops but the motor 412 does not stop, for example.

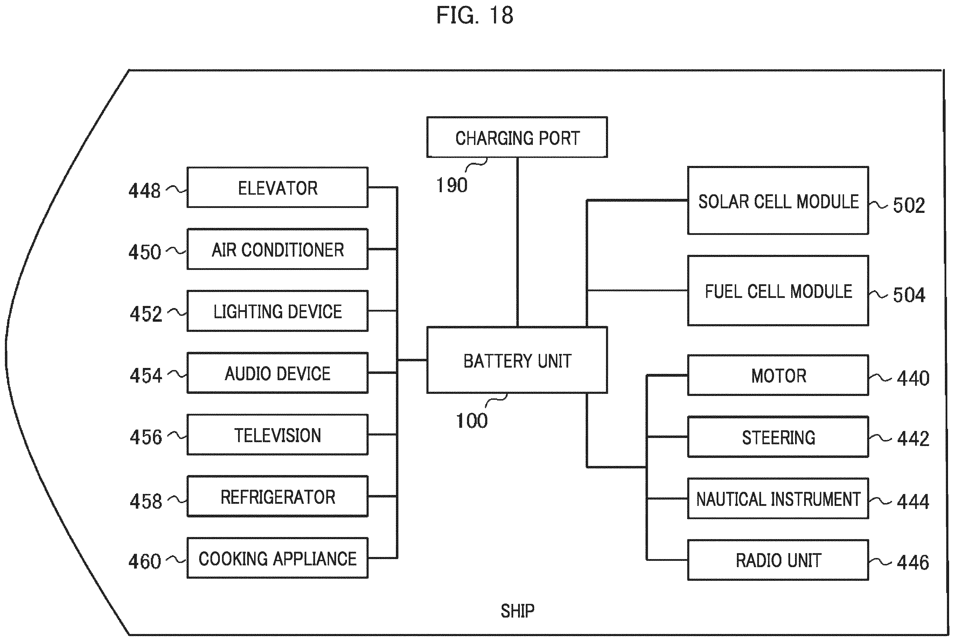

FIG. 18 is a configuration diagram of power equipment of a ship. The battery unit 100 is charged by power supplied through a charging port 190 and power generated by the solar cell module 502 and the fuel cell module 504. The battery unit 100 then discharges to supply power to a motor 440, a steering 442, a nautical instrument 444, a radio unit 446, an elevator 448, an air conditioner 450, a lighting device 452, an audio device 454, a television 456, a refrigerator 458, and a cooking appliance 460, which are electric appliances (devices) 400. For electric appliances (devices) 400, such as the motor 412, which are operated or driven by alternating current, direct current is converted to alternating current by an inverter. The inverter is not illustrated. The ship moves forward and backward by rotating a screw propeller by the motor 440.

In addition, the battery unit 100 performs control on the power use on the basis of priority levels set for the individual electric appliances (devices) 400 in a manner similar to the case of a home. For example, the motor 440, the steering 442, the nautical instrument 444, and the radio unit 446 are set to have high priority levels, the air conditioner 450, the refrigerator 458, the cooking appliance 460, and the lighting device 452 are set to have intermediate priority levels, and the elevator 448, the audio device 454, and the television 456 are set to have low priority levels. As a result, when the SOC has lowered, the elevator 448 stops but the motor 440 does not stop, for example.

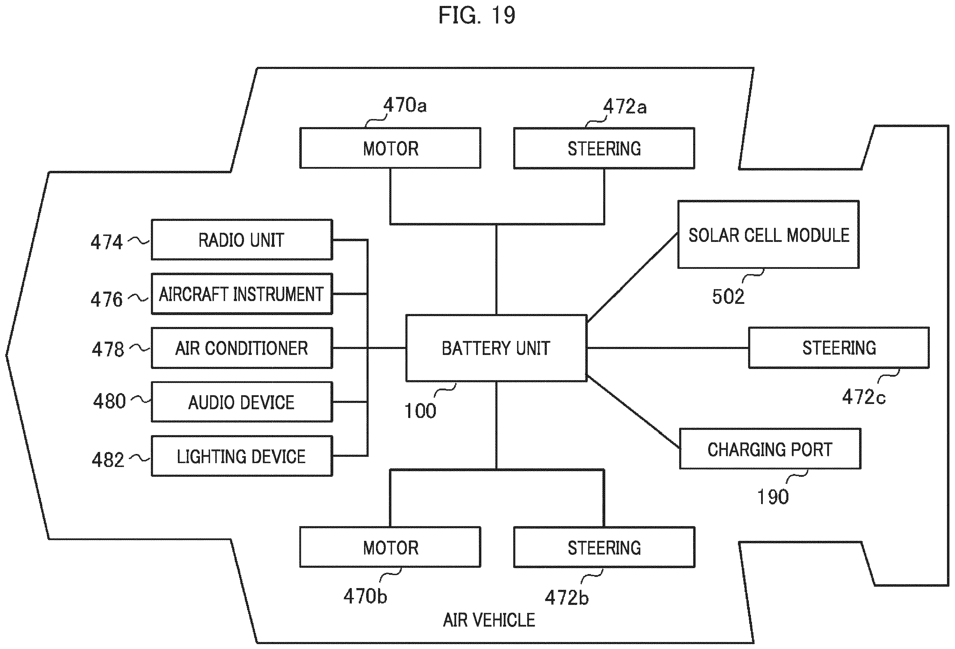

FIG. 19 is a configuration diagram of power equipment of an air vehicle.
Examples of the air vehicle include an aircraft, a helicopter, an airship, and a drone. The battery unit 100 is charged by power supplied through a charging port 190. The battery unit 100 then discharges to supply power to a motor 470a, a motor 470b, a steering 472a, a steering 472b, a steering 472c, a radio unit 474, an aircraft instrument 476, an air conditioner 478, an audio device 480, and a lighting device 482, which are electric appliances (devices) 400. For electric appliances (devices) 400 that are operated or driven by alternating current, direct current is converted to alternating current by an inverter. The inverter is not illustrated. The air vehicle flies by rotating propellers by the motor 470a and the motor 470b.

In addition, the battery unit 100 performs control on the power use on the basis of priority levels set for the individual electric appliances (devices) 400 in a manner similar to the case of a home. For example, the motor 470a, the motor 470b, the steering 472a, the steering 472b, the steering 472c, the radio unit 474, and the aircraft instrument 476 are set to have high priority levels, the air conditioner 478 and the lighting device 482 are set to have intermediate priority levels, and the audio device 480 is set to have a low priority level. As a result, when the SOC has lowered, the audio device 480 stops but the motor 470a and the motor 470b do not stop, for example.

In addition, the battery unit 100 may also be applied to a robot or construction equipment, among others.

The present invention is not limited to the embodiment described above and modifications thereof, and any component thereof can be modified and embodied without departing from the scope of the invention. Components described in the embodiment and modifications can be combined as appropriate to form various other embodiments. Some components may be omitted from the components presented in the embodiment and modifications.

## Claims

1. A battery unit comprising:
a power storage unit for supplying power to an external device;
a communication unit for performing communication with the external device; and
a processor for performing a control process on the external device on the basis of a power storage status of the power storage unit or information obtained from the external device.

2. The battery unit according to claim 1, wherein in the control process, the processor controls power use of the external device.

3. The battery unit according to claim 2, wherein
the power storage unit supplies power to a plurality of external device, and
in the control process, the processor selects an external device to be controlled on the basis of a priority level of each of the external devices.

4. The battery unit according to claim 2 or 3, wherein
the power storage unit performs charging by using power generated by a power generation module, and
in the control process, the processor controls the power use of the external device on the basis of a power generation status of the power generation module.

5. The battery unit according to claim 4, wherein
in the control process, when power generation of the power generation module is larger than a reference, the processor limits the power use of the external device.

6. The battery unit according to any one of claims 1 to 5, wherein
in the control process, when a state of charge (SOC) of the power storage unit is lower than a reference, the processor limits the power use of the external device.

7. The battery unit according to any one of claims 1 to 6, wherein
in the control process, when a charging current of the power storage unit is larger than a reference, the processor encourages the power use of the external device.

8. The battery unit according to any one of claims 1 to 7, wherein
in the control process, when a discharging current of the power storage unit is larger than a reference, the processor suppresses the power use of the external device.

9. The battery unit according to any one of claims 1 to 8, wherein the processor operates by power discharged by the power storage unit.

10. The battery unit according to claim 9, wherein the power storage unit includes a plurality of storage batteries, and while one of the storage batteries is charged, another one of the storage batteries discharges power to be used by the processor.
